# EUROPEAN PATENT APPLICATION

(11) **EP 0 986 265 A2**
(43) Date of publication of application: **15.03.2000**
(21) Application number: 99304427.0
(22) Date of filing: 08.06.1999
(51) Int. Cl.: H04N 7/50, H04N 7/60, H04N 7/30

(54) **Method for scalable delivery of compressed video data**

(30) Priority: 07.09.1998 SG 9803575
(71) Applicant: VICTOR COMPANY OF JAPAN, LTD., Yokohama-Shi, Kanagawa-Ken (JP)
(72) Inventor: Bin, Wang, Singapore 560306 (SG)
(74) Representative: Crawford, Andrew Birkby

(57) **Abstract**

A method and system for scalable delivery of compressed video data over a communications network which is dynamically adaptable to network congestion conditions. A frequency domain encoding algorithm is used to encode/compress the video data which generates frequency domain coefficients and motion vectors representing the video. The DC coefficients, motion vectors and header data required for decoding are stored in a base-file, and the AC coefficients are split into ordered groups and stored in separate delta-files. During transmission the base-file is always sent, which itself can provide a low level of video quality when decoded. Depending upon network conditions, as many of the delta-files containing the AC coefficients as possible or desirable can be dynamically multiplexed with the base-file to provide for greater quality video. The network conditions can be determined by monitoring the packet loss ratio on the network, for example.

## Description

### Field of the invention

The present invention related to the delivery or communication of compressed moving pictures data, and in particular to a scalable delivery scheme for compressed video.

### Background of the Invention

Digital compression has been applied to moving pictures for the purposes of transmissions bandwidth or storage size reduction. One current art of such compression techniques can be derived from the ISO/IEC MPEG Standards, the ISO/IEC 11172-3 (MPEG-1), the ISO/IEC 13818-2 and 13818-6 (MPEG-2) and the MPEG-2 TM5 (test model 5), developed by the Moving Picture Experts Group of the International Organisation for Standardization. The disclosures of those standards documents and annexes are hereby expressly incorporated into this specification by reference.

MPEG-2 video has been widely adopted in nowadays multimedia applications, eg., video-on-demand and multimedia broadcasting service. With the emergence of Fast Ethernet and Gigabit switching capabilities and its wide acceptance, many people are now attempting to use IP-based networks to deliver MPEG-2 video. However current IP-based networks, and even future networks that support protocols like Resource Reservation Setup Protocol (RSVP) or Type of Service (ToS), can not really provide a Quality of Service (QoS) guarantee as in ATM networks which incorporate such service requirements in its specifications. Therefore, when an IP-based network becomes congested, the MPEG-2 video quality suffers significantly because of packet loss. Scalable delivery schemes have been suggested in order to solve this problem because the scalable delivery schemes can guarantee the best video quality in proportion to the available bandwidth.

The MPEG-2 video compression algorithm employs two basic techniques: motion compensation for the reduction of the temporal redundancy, and transform domain coding for the reduction of spatial redundancy. The motion compensation technique, which is applied both in the forward and backward direction, results in three kinds of frame: I, P and B frames. The I-frames(I-pictures) are intra-coded pictures used mainly for random access or scene update. The P-frames(P-pictures) use forward motion predictive coding with reference to previously coded I- or P- frames (anchor pictures), and the B-frames(B-pictures) use both forward and backward motion predictive/interpolative coding with reference to previously coded I-or P-frames. In the MPEG-2 video based applications eg., video-on-demand, VCR-like operations such as Fast Forward/Rewind are normally implemented by only transferring I or P frames and skipping B or P frames. Only transferring I or P frames generates a large amount of traffic because I and P frames are of much larger size compared to B frames. Therefore, a very high bandwidth is required to accommodate such a large traffic throughput. If it is not satisfied the network is likely to be congested. A scalable delivery scheme described herein can be used to avoid network congestion caused by the large amount of traffic generated from such VCR operations.

Previous reported work on scalable delivery of MPEG-2 video involves, for example, data partitioning, and spatial, temporal and frequency resolution scaling. A description of such techniques can be found in an article entitled "Bandwidth Renegotiation for VBR Video Over ATM Networks" (D.J. Reininger, D. Raychaudhuri and J.Y. Hui; IEEE Journal on Selected Areas in Communications, Vol. 14, No. 6, pp1076-1086, August 1996). Data partitioning assigns different frequency DCT coefficient with different priority. Spatial resolution scaling involves switching among multiple video streams pre-compressed at different resolutions. Temporal resolution scaling involves selectively skipping frames to reduce the bit rate. Frequency resolution scaling involves requantizing the quantized information using a higher quantization step so that the desired bit rate can be achieved.

However, all these schemes have intrinsic disadvantages. Data partitioning, for example, lacks flexibility. Spatial resolution scaling requires more storage space to store multiple video streams. Temporal resolution scaling introduces more serious video quality degradation compared to other schemes. Frequency resolution scaling increases the complexity of the server program and introduces a long processing delay.

### Summary of the Invention

In accordance with the present invention, there is provided a method for scalable delivery of moving pictures data over a communications network, comprising the steps of:
encoding the moving pictures data according to a frequency domain encoding algorithm to generate an ordered sequence of frequency domain coefficients;
arranging the sequence of frequency domain coefficients into a plurality of consecutively ordered frequency groups;
determining a communications status parameter of the network; and
transmitting on the communications network a set of at least one of the consecutively ordered frequency groups selected in order beginning with the lowest order frequency group according to the communications network status parameter.

The present invention also provides a method for delivering encoded visual media data over a transmission medium comprising the steps of:
applying a frequency domain encoding algorithm to visual media data to generate encoded media data having a sequence of ordered frequency domain coefficients;
arranging the coefficients into a plurality of frequency groups, each frequency group having at least one consecutively ordered frequency domain coefficient;
transmitting the lowest order frequency group over the transmission medium; and
according to conditions on the transmission medium, transmitting at least one higher order frequency group over the transmission medium multiplexed with the lowest order frequency group.

The present invention further provides a method of encoding picture data for scalable delivery over a communications network, comprising:
applying a frequency domain encoding algorithm to the picture data to generate an ordered sequence of frequency domain coefficients;
arranging the frequency domain coefficients into a base-file and a plurality of delta-files, the base-file including the lowest order frequency domain coefficients together with header data and required decoding information and the delta-files each including a plurality of consecutive higher order frequency coefficients; and
storing the base-file and delta-files for selective multiplexing of the delta-files with the base-file during transmission over said communications network.

### Brief Description of the Drawings

The invention is described in greater detail hereinafter, by way of example only, with reference to embodiments thereof which are described with the aid of the accompanying drawings, wherein:
Figure 1 is a diagrammatic illustration of a scalable video data delivery scheme in accordance with an embodiment of the present invention;
Figure 2 is a block diagram illustrating the composition of video data stream of various bandwidth requirements from a base-file and several delta-files representing encoded video data;
Figure 3 is a diagrammatic illustration of network status measurements based on packet loss ratio in a packet-based communications network, for implementing a particular form of the present invention;
Figure 4 is a diagram showing the composition of delta-files in an embodiment of the invention and the effect of run length encoding; and
Figure 5 is a block diagram of an advantageous structure of delta-files in an embodiment of the invention, for ease of multiplexed construction of a video data stream for transmission.

### Detailed Description of the Preferred Embodiments

Embodiments of the invention for implementing a scheme for scalable delivery of compressed video are described hereinbelow. The basis of the scalable delivery scheme is relatively simple, and can be easily implemented and practised without many disadvantages associated with scalable delivery schemes which have been proposed previously, some of which are mentioned above. The basis of the scalable delivery scheme exploits limitations in human visual acuity to higher (spatial) frequency components in moving images, and accordingly is able to utilise aspects of a frequency based video picture data encoding or compression system. Broadly speaking, a conventional frequency based encoding or compression system can be modified to deliver video data in which the upper frequency components are limited according to the available delivery capabilities of the communications medium over which the data is conveyed. Preferably the communications network which is utilised for delivering the video data has provision for indicating a measure of the network congestion(status) or available bandwidth, by which a judgement on the limitation of upper frequency components to be included may be made.

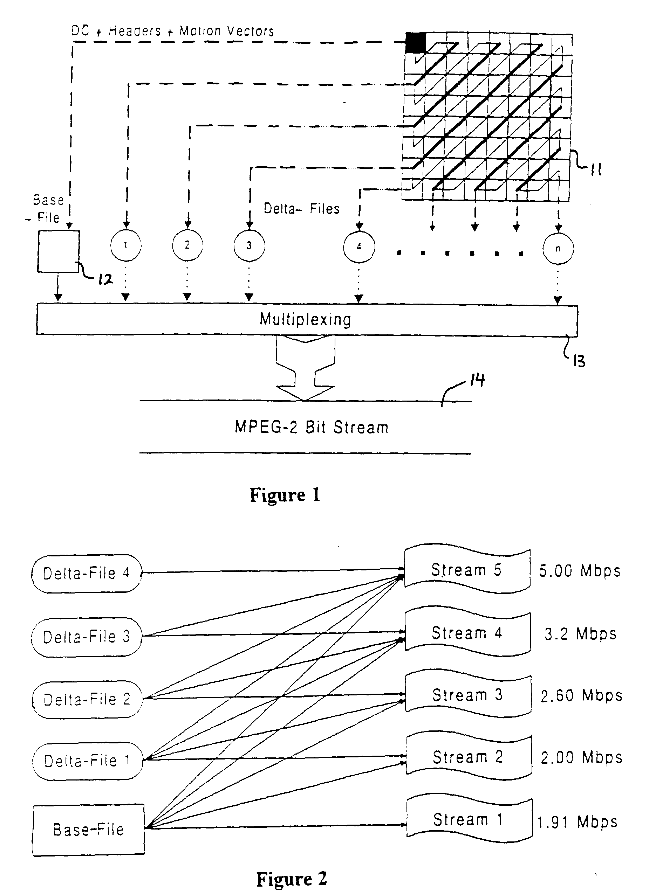

The scheme is based on the feature that different frequency AC coefficients in frequency encoded picture data have different contributions to the video quality, and that human beings are not very sensitive to the video quality degradation caused by the removal of high frequency AC coefficients. Referring to Figure 1, when applying the scheme in a real application, e.g. a video-on-demand content server, an MPEG-2 bit stream 11 is split and stored into a base-file 12 and one or more delta-files (labelled 1...n). The base file 12 contains the header data, motion vectors and DC coefficients. The delta-files only contain different respective AC frequency coefficients. At the time of transmission of a video stream based on the encoded video data, the server dynamically multiplexes (13) the base-file and a certain number of delta-files into a resultant stream to deliver (14). The number of delta-files is determined according to the current status of the network over which the video data stream is to be delivered, obtained from the network management protocol. The pre-compressed and stored base-file and delta-files representing the video data can be dynamically multiplexed at the time of transmission, based on a dynamic network status parameter representing network congestion, for example, so that the scalable delivery scheme can be implemented in real-time.

The compression of the raw video data using a frequency domain encoder (e.g. MPEG-2 compliant encoder) and dividing the resultant frequency coefficients amongst the base-file and a plurality of delta-files can be performed using any suitable digital computational apparatus of the type which is already known for compressing video. The system for delivering the encoded video in a scalable manner according to an embodiment of the invention does not require complex computational processing, and may typically be implemented on a computer server platform coupled to convey data over a suitable communications network (as discussed in greater detail below). The compression and file creation can be performed on the same computer apparatus as the multiplexing delivery scheme, or can be pre-computed on a separate processor.

Compared to data partition, this scheme is more flexible since it is possible to divide the encoded frequency domain coefficient data into as many delta-files as required or desired. Compared to spatial resolution scaling, this scheme requires much less extra space, as delta-files need contain only AC coefficients and no headers and motion vector information. Compared to temporal resolution scaling, this scheme results in better video quality because no frames are skipped. Compared to frequency resolution scaling, the server program is simpler and introduces less processing delay, since only a multiplex process is needed and no re-quantization is involved.

In the following description, several examples are presented to explain the use of the scalable delivery scheme according to embodiments of the invention in real applications to achieve efficient transmission and avoid network congestion when performing VCR-like operations. The MPEG-2 video stream used in the examples is described, as well as how to split it into the base file and delta-files. Two application scenarios that adopt the proposed scheme are then described, one is based on RTP/RTCP, the other one based on MPEG-2 DSM-CC SRM. Finally, the manner in which the problem of network congestion, associated with VCR-like operations for example, can be eased by implementation of a system embodying the present invention is explained.

An MPFG-2 video elementary stream is used in the below examples, and the general structure of the MPEG-2 video data will be readily understood by those of skill in the art from the above referenced documents. In this example the video stream has a resolution of 720 by 480 pixels and a frame rate equal to 29.970 frames per second. The number of frames in a group of pictures (GOP) is 15. Further, the spacing between consecutive P frames is 3, such that, in other words, the GOP pattern is IBBPBBPBBPBBPBB. The bit rate of the stream is 5Mbps. The video stream file is of size 147M bytes.

In this case, the compressed video stream can be split into the base-file and four delta-files containing the various AC compressed image components. The base file contains headers, motion vectors and DC coefficients, and has a size of 61 Mbytes. The four delta-files contain the AC coefficients, which are numbered from 1 to 63 in increasing frequency. Table 1, below, indicates the arrangement of the AC coefficients in the delta files.

**Table 1.**

| Base-File and Delta-Files Description | | |
|---|---|---|
| | AC Frequency Range | File Size (Mbytes) |
| Base-File | 0 | 61 |
| Delta-File 1 | 1 | 3 |
| Delta-File 2 | 2-5 | 20 |
| Delta-File 3 | 6-10 | 16 |
| Delta-File 4 | 11-63 | 47 |

During transmission, the server dynamically multiplexes the base-file and several delta-files into a resultant stream with the bit rate corresponding to the current network status. If the network load is light, the server may multiplex the base file and all delta-files, which results in the stream with the best video quality. In contrast, if the network is congested, the server may multiplex the base-file and only a certain number of delta-files, e.g. delta-files 1 and 2, to achieve a lower bit rate. Or if the network is very congested, the server can just deliver the base file to achieve the lowest bit rate. Unavoidably, in this case, the video quality degrades, as some high frequency coefficients are not transmitted. However, the degradation suffered from the removal of high frequency coefficients is much less than that from packet loss in the communications network during delivery.

As illustrated in Figure 2, for this example video stream, by combing the base-file and various delta-files, five resultant deliverable video streams with different bit rates are possible. The stream with the lowest bandwidth requirements (Stream 1), consists of the base-file only, and in this case is 1.91 Mbps. The second available video stream (Stream 2) comprises the base-file and delta-file 1, and requires 2.00 Mbps. Stream 3 includes the base-file and delta-files 1 and 2 (2.60 Mbps) and Stream 4 further includes delta-file 3 (3.20 Mbps). The highest resolution compressed video stream (Stream 5) includes all of the AC components, and requires transmission of the base-file and all of delta-files 1 to 4. Stream 5 requires 5.00 Mbps.

The use of a network management protocol which can provide network status information is particularly advantageous for delivery of scalable video streams in embodiments of the present invention. One such protocol is the Real-time Transport Protocol (RTP), which is described in "RTP: A Transport Protocol for Real-Time Applications" (H. Schulzrinne, S. Casner, R. Frederick and V. Jacobson; RFC 1889; January 1996). Another such protocol is provided by the MPEG-2 Digital Storage Media - Command and Control (MPEG-2 DSMCC) which is described in ISO/IEC International Standard 13818-6, "Information Technology - Generic Coding of Moving Pictures and Associated Audio Information: Digital Storage Media Command and Control", (1996). The disclosure of both of these referenced documents is incorporated herein by reference.

The Real-time Transport Protocol (RTP) provides end-to-end delivery services for data with real-time characteristics. The services include payload type identification, sequence numbering, timestamping and delivery monitoring. The RTP Control Protocol (RTCP) is based on the periodic transmission of control packets to all participants in the RTP session. Its primary function is to provide feedback on the quality of the data transmission in terms of packet loss ratio, round-trip delay and jitter.

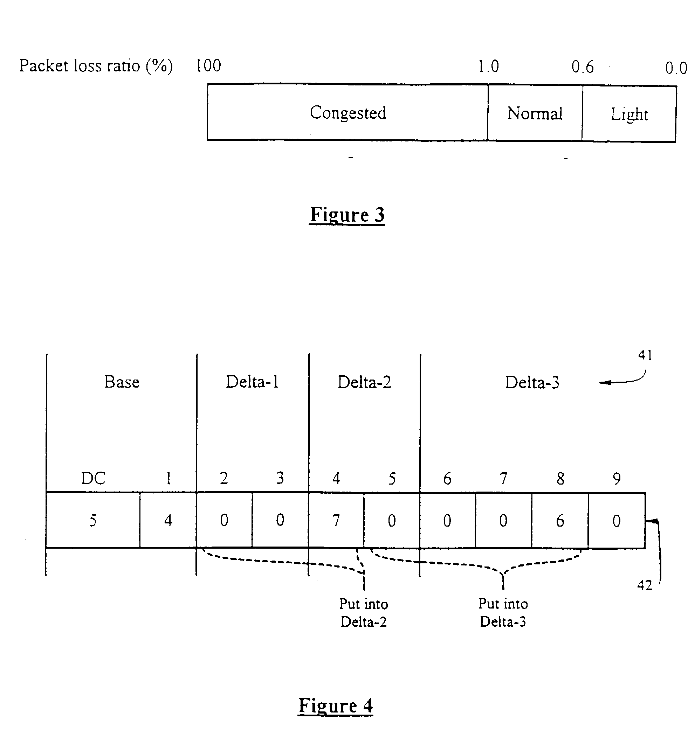

The packet loss ratio can be used to estimate the network status for the purposes of implementing a preferred feature of the present invention. The packet loss ratio is provided from the network in a form which indicates the percentage of packets lost by the network (0.0% - 100%) over a preceding time period. This information can therefore be utilised to provide a measure of congestion on the network. One way of doing this is to set a number of thresholds of packet loss ratio as related to network congestion. For example, Figure 3 is a diagrammatic illustration of network status measurements (congestion) based on packet loss ratio according to two thresholds set at 0.6% and 1.0%. This means that three phases of network status can be determined from the packet loss ratio: congested, normal and light.

In this implementation of the scalable video delivery scheme, the server uses RTP to deliver the video stream and at the same time monitors the network status based on RTCP control packets. At the beginning of transmission, the server delivers stream 5 (refer to Figure 2), which is the combination of the base-file and all delta-files. The server keeps sending stream 5 (5.00 Mbps) as long as the packet loss ratio is less than 1.0% (i.e. the network status is considered as normal/light). If the packet loss ratio reaches 1.0%, the server knows that the network is getting congested. This causes the server to stop multiplexing delta-file 4 into the resultant stream, which means the server begins to deliver stream 4 which has a lower bit rate (3.2 Mbps). If the packet loss ratio is still larger than 1.0%, the server stops multiplexing the highest frequency delta-files one by one till packet loss ratio is less than 1.0%. For example, the packet loss ratio of 1.0% on the network might be reached whilst stream 2 is being delivered by the server. On the other hand, suppose that another traffic source on the network stops generating packets so that the video server determines a drop in the packet loss ratio. If the packet loss ratio reaches less than 0.6%, the server determines that the network load is light. Then the server can multiplex the higher frequency delta-files, ie., delta-file 3 and 4, into the resultant stream as long as the packet loss ratio remains less than 1.0%. This allows delivery of the best video quality in proportion to the current network situation to be guaranteed.

The MPEG-2 Digital Storage Media - Command and Control (DSM-CC) provides the protocols needed to deliver a complete application such as video-on-demand. Within the DSM-CC functional reference model, there is an entity called Session and Resource Manager (SRM) whose purpose is to control sessions and network resources. It is possible for some new resource descriptors to be added in the SRM, so that the SRM can provide the information such as available bandwidth through U-N messages. Then based on a measure of the available bandwidth provided in this way, the server can directly determine how many delta-files need to be multiplexed in the resultant stream so that the best video quality can be maintained.

In the MPEG-2 video based applications, e.g. video-on-demand, VCR-like operations such as Fast Forward/Rewind can be implemented by transferring I or P frames only and skipping B or P frames. Consider, for example, an implementation of the Fast Forward/Rewind functions on the sample video stream introduced above. The bit rate of the resultant stream for skipping B frames only is 6.7 Mbps which is 1.34 times of the original stream. This means that a 1.34 times higher bandwidth is needed to deliver the resultant stream. The faster motion can even be achieved by skipping both P and B frames. If so, the bit rate of the resultant stream is up to 10 Mbps. To accommodate such a large amount of traffic, a very high bandwidth is required of the transport network also. If it is not satisfied the network is very likely to be congested.

The scalable delivery scheme described herein can be used to solve the above problem. First, the removal of high frequency coefficients from the encoded data as proposed in the scheme can be used to efficiently reduce the bit rate in VCR-like operations so as to avoid the possible network congestion. Then, based on the current network status, the most suitable number of delta-files can be determined to generate a resultant stream to maintain the best video quality.

**Table 2.**

| Stream Bit Rate for different resultant streams in VCR-like operations | | | | | |
|---|---|---|---|---|---|
| Stream Bit Rate (Mbps) | Stream 1 | Stream 2 | Stream 3 | Stream 4 | Stream 5 |
| Skipping B only | 2.05 | 2.4 | 3.5 | 4.5 | 6.7 |
| Skipping P and B | 2.95 | 3.7 | 5.8 | 7 | 10 |

From Table 2, above, it can be observed that, by only transmitting the base-file and a certain number of delta-files, a lower bit rate can be generated to avoid network congestion. For example, by transmitting base-file and delta-file 1, which forms stream 2, the bit rate can be reduced from 6.7 to 2.4 Mbps (for a fast motion involving skipping B-frames only) and reduced from 10 to 3.7 Mbps (for a fast motion involving skipping both P and B-frames). Based on the network situation, the server can actually select a particular stream to deliver so that the best video quality in proportion to current network situation can be maintained.

Figure 4 illustrates a scheme for arranging the frequency coefficients into delta-files for an implementation of an embodiment of the present invention. The base-file and delta-files are indicated by reference numeral 41, and the ordered frequency coefficients labelled DC and 1,...,9 (not all coefficients are shown) are indicated by reference numeral 42. As diagarammatically illustrated in the Figure, the base-file contains the run length encoded DC coefficient and the first AC coefficient (frequency coefficient 1), as well as the compression header data, motion vectors and the like. According to the MPEG standard, the base-file is still an MPEG-2 standard compliant stream which can be decompressed by an appropriate MPEG-2 standard decoder. The delta-files contain run length coded AC coefficients numbered 2 to 63. Each run length code denotes a run of zeros followed by a non-zero coefficient of a particular level. If one run length code covers more than all coefficients allocated to a particular delta-file, the code will be put into the higher frequency delta-file which contains the non-zero coefficient.

As shown in Figure 4, the base-file contains the DC and first AC coefficient, the first delta-file (Delta-1) is allocated AC frequency coefficients 2 and 3, the second delta file (Delta-2) is allocated frequency coefficients 4 and 5, and Delta-3 is allocated coefficients numbered 6 to 63. Because the AC coefficients of frequency 2 and 3 are zero, they will be combined in a single run length code together with non-zero frequency coefficient 4. This run length code will be put into Delta file number 2, even though two of the coefficients therein are allocated to Delta-1. Similarly, the run length code denoting coefficients 5 to 8 are put into Delta-3.

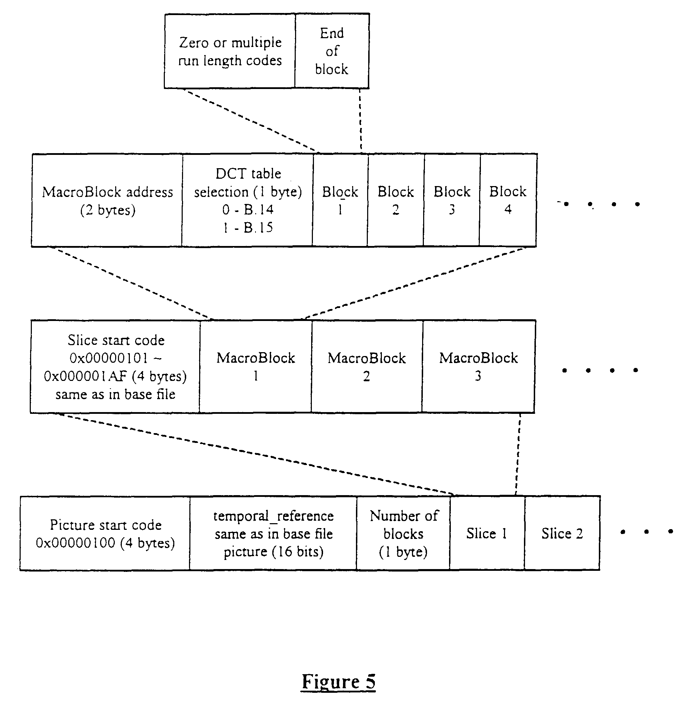

The delta files are arranged according to a syntax which enables the proper AC coefficients to be extracted and multiplexed with the corresponding portions of the base-file at the time of transmission. This allows the transmitted data to be arranged according to, for example, an industry standard such as the MPEG-2 standard so that the transmitted data stream can be decoded by means of a standard decoder. A preferred structure for a delta-file for an MPEG? based system is illustrated in block diagram form in Figure 5.

When the server undertakes construction of a data stream for transmission from the base-file and selected delta-file(s), it synchronously scans the base-file and selected delta-files. Whenever the server program reaches a new block of a macroblock within a picture in the base-file, it also reaches the corresponding position in each of the delta-files, based on the syntax illustrated in Figure 5. In other words, the data in each of the delta-files is structured in the same way as the base-file so that corresponding coefficient data in the base-file and delta-files can be easily retrieved. Thus, when a new block of coefficient data is encountered during scanning of the base-file, the selected corresponding AC coefficient data in the delta-files is also reached, and can be easily multiplexed together to form, for example, an MPEG compliant resultant video stream.

The foregoing detailed description of the preferred embodiments is presented by way of example only, and is not intended to be considered limiting to the invention as defined in the appended claims. It is will be readily apparent to those skilled in the art that numerous alternatives to the particular features described in relation to the embodiments of this invention are possible without departing from the essence of the present invention. For example, although the preceding description is based primarily upon MPEG-2 video compression, it is clear that other forms of frequency domain compression or encoding of picture data can equally be employed in implementing the invention. Further, several different examples of dividing or grouping the frequency coefficients into "delta-files" are given, but it will be understood that these examples are not intended to be limiting to the invention. Similarly, the particular example given in relation to determining the appropriate frequency coefficients to multiplex into the delivery stream according to an available network packet loss ratio is given as a presently preferred implementation only, and it will be recognised that various other ways of determining the most appropriate inclusion of frequency components in the delivery scheme are possible and may depend upon the particular communications network used in practice.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

## Claims

1. A method for delivering encoded visual media data over a transmission medium comprising the steps of:
applying a frequency domain encoding algorithm to visual media data to generate encoded media data having a sequence of ordered frequency domain coefficients;
arranging the coefficients into a plurality of frequency groups, each frequency group having at least one consecutively ordered frequency domain coefficient;
transmitting the lowest order frequency group over the transmission medium; and
according to conditions on the transmission medium, transmitting at least one higher order frequency group over the transmission medium multiplexed with the lowest order frequency group.

2. A method as claimed in claim 1, wherein the visual media data comprises video data.

3. A method as claimed in claim 2, wherein the frequency domain encoding algorithm comprises an MPEG compression system.

4. A method as claimed in claim 1, 2 or 3, wherein the coefficients of the plurality of frequency groups are stored in corresponding respective data files, and wherein the lowest order data file contains the DC frequency coefficients.

5. A method as claimed in claim 4, wherein the lowest order data file also contains header data and motion vector data.

6. A method as claimed in claim 1, wherein a measure of the amount of congestion on the transmission medium is used to determine how many of the higher order frequency groups to multiplex with the lowest order frequency group for transmission.

7. A method as claimed in claim 6, wherein a packet loss ratio is used as the measure of the amount of congestion on the transmission medium.

8. A method as claimed in claim 6, wherein if the measured congestion is less than a first threshold one or more of the higher order frequency groups are added for transmission with the lowest order frequency group.

9. A method as claimed in claim 6 or 8, wherein if the measured congestion is greater than a second threshold one or more of the higher order frequency groups are prevented from transmission with the lowest order frequency group.

10. A method for scalable delivery of moving pictures data over a communications network, comprising the steps of:
encoding the moving pictures data according to a frequency domain encoding algorithm to generate an ordered sequence of frequency domain coefficients;
arranging the sequence of frequency domain coefficients into a plurality of consecutively ordered frequency groups;
determining a communications status parameter of the network; and
transmitting on the communications network a set of at least one of the consecutively ordered frequency groups selected in order beginning with the lowest order frequency group according to the communications network status parameter.

11. A method as claimed in claim 10, wherein the frequency domain encoding algorithm comprises an MPEG compression system.

12. A method as claimed in claim 1, 2 or 3, wherein the frequency domain coefficients of the consecutively ordered frequency groups are stored in corresponding respective data files, and wherein the lowest order data file contains the DC frequency coefficients.

13. A method as claimed in claim 12, wherein the lowest order data file also contains header data and motion vector data.

14. A method as claimed in claim 10, wherein the step of determining a communications status parameter of the network comprises determining a measure of the amount of congestion on the network for the purpose of selecting the number of higher order frequency groups to multiplex with the lowest order frequency group for transmission on the network.

15. A method as claimed in claim 14, wherein a packet loss ratio is used as the measure of the network congestion.

16. A method as claimed in claim 14, wherein if the measured network congestion is less than a first threshold one or more of the higher order frequency groups are added for transmission with the lowest order frequency group.

17. A method as claimed in claim 14 or 16, wherein if the measured network congestion is greater than a second threshold one or more of the higher order frequency groups are prevented from transmission with the lowest order frequency group.

18. A method of encoding picture data for scalable delivery over a communications network, comprising:
applying a frequency domain encoding algorithm to the picture data to generate an ordered sequence of frequency domain coefficients;
arranging the frequency domain coefficients into a base-file and a plurality of delta-files, the base-file including the lowest order frequency domain coefficients together with header data and required decoding information and the delta-files each including a plurality of consecutive higher order frequency coefficients; and
storing the base-file and delta-files for selective multiplexing of the delta-files with the base-file during transmission over said communications network.

19. A system for scalable delivery of moving pictures data over a communications network to which the system is coupled, comprising:
a moving pictures encoder for generating an ordered sequence of frequency domain coefficients, representing the moving pictures data, according to a frequency domain encoding algorithm;
means for arranging the sequence of frequency domain coefficients into a plurality of consecutively ordered frequency groups and storing the ordered frequency groups in corresponding respective data files;
means for determining a communications status parameter of the network;
selection means for selecting a consecutive set of at least one of the ordered data files, beginning with the lowest order data file, and zero or more of the higher order data files according to the communications network status parameter; and
delivery means for multiplexing together the selected set of ordered data files for transmission on the communications network.
